# EUROPEAN PATENT APPLICATION

(11) **EP 4 365 127 A1**
(43) Date of publication of application: **08.05.2024**
(21) Application number: 22833218.5
(22) Date of filing: 29.06.2022
(51) Int. Cl.: C01B 3/02, C01B 3/04, C01G 49/02, C01B 32/05, C01B 32/50

(54) **METHOD FOR PRODUCING CARBON AND HYDROGEN, CARBON MATERIAL, REDUCING AGENT, AND METHOD FOR DECOMPOSING CARBON DIOXIDE**

(30) Priority: 29.06.2021 JP 2021107907; 28.06.2022 JP 2022103360
(71) Applicant: Mitsubishi Materials Corporation, Tokyo 100-8117 (JP)
(72) Inventor: DAI Wenbin, Tokyo 100-8117 (JP); HORIUCHI Nobutake, Naka-shi, Ibaraki 311-0102 (JP)
(74) Representative: Gille Hrabal Partnerschaftsgesellschaft mbB Patentanwälte
(86) International application number: PCT/JP2022/025993
(87) International publication number: WO 2023/277072

(57) **Abstract**

Provided are a carbon dioxide decomposition step of generating magnetite that has a surface to which carbon adheres, a carbon separation step of generating carbon and iron chloride, a hydrogen production step of generating magnetite, hydrogen, and a hydrogen chloride gas, and a reducing agent regeneration step of generating the reducing agent used in the carbon dioxide decomposition step, in which the reducing agent is an oxygen-deficient iron oxide represented by Fe₃O_{4-δ} (where, δ is 1 or more and less than 4) obtained by reducing magnetite while maintaining a magnetite crystal structure, an oxygen-completely deficient iron (δ = 4) obtained by completely reducing magnetite, an oxygen-deficient iron oxide obtained by reducing hematite or a used disposable warmer, or an oxygen-completely deficient iron obtained by completely reducing hematite or a used disposable warmer.

## Description

### [Technical Field]

The present invention relates to a method for producing carbon and hydrogen, in which carbon and hydrogen are produced by using carbon dioxide and water, a carbon material, a reducing agent, and a method for decomposing carbon dioxide.

Priority is claimed on Japanese Patent Application No. 2021-107907, filed June 29, 2021, and Japanese Patent Application No. 2022-103360 filed June 28, 2022, the contents of which are incorporated herein by reference.

### [Background Art]

A large amount of carbon dioxide (CO₂) is emitted from, for example, steel plants, thermal power plants, cement plants, garbage incineration facilities, and the like. Thus, from the viewpoint of preventing global warming, it is important to recover carbon dioxide without releasing the carbon dioxide in the atmosphere.

On the other hand, with the increase in demand for hydrogen for fuel cell vehicles (FCV) and hydrogen power generation, there is a demand for hydrogen that can be supplied in large amounts at low cost.

In the related art, as techniques of separating and recovering carbon dioxide, chemical absorption methods, physical absorption methods, separation methods, and the like are known. In addition, as techniques of decomposing the recovered carbon dioxide, semiconductor photocatalyst methods, photochemical reduction methods using metal colloid catalysts, metal complexes, catalysts, or the like, electrochemical reduction methods, and decomposition methods using chemical fixation conversion reactions, for example, a reaction with a base, a transfer reaction, a dehydration reaction, an addition reaction, and the like are known. However, there was an issue that one of these methods for decomposing carbon dioxide is not practical in terms of reaction efficiency, cost, and energy consumption.

For this reason, for example, in Patent Document 1, disclosed is a method for generating carbon by reducing carbon dioxide with magnetite having a vacancy that is an oxygen-deficient site in the lattice, that is, an oxygen-deficient iron oxide, thereby obtaining methane or methanol from the carbon. In the invention of Patent Document 1, it is described that a closed system capable of continuously decomposing carbon dioxide efficiently can be achieved in such a manner that carbon dioxide is decomposed (undergoes a reduction reaction) by the oxygen-deficient iron oxide, and an iron oxide produced by oxidation is reduced with hydrogen to lead the oxygen-deficient iron oxide back again.

On the other hand, as a method for producing high-purity hydrogen, for example, in Patent Document 2, a method for reacting iron chloride with water at 410°C or higher to generate magnetite, hydrogen chloride, and hydrogen, and recovering the generated hydrogen with a separation membrane is disclosed. According to the invention in such Patent Document 2, it is possible to effectively utilize process waste heat discharged from various plants to obtain hydrogen, which is a clean energy fuel, by a thermochemical decomposition technique using water as a raw material.

### [Citation List]

### [Patent Documents]

[Patent Document 1]
   Japanese Unexamined Patent Application, First Publication No. H05-0184912
[Patent Document 2]
   Japanese Unexamined Patent Application, First Publication No. 2001-233601

### [Summary of Invention]

### [Technical Problem]

However, under the reaction conditions disclosed in Patent Document 1, there is an issue that the oxygen deficiency of the oxygen-deficient iron oxide is small (in a case where the oxygen-deficient iron oxide is represented by Fe₃O_{4-δ}, δ is about 0.16 at maximum), and the ability to decompose carbon dioxide is low, so that an efficient decomposition treatment cannot be carried out on the carbon dioxide. In addition, in a case where carbon dioxide is continuously decomposed by the method of Patent Document 1, there is another issue that it is necessary to supply hydrogen for reducing magnetite to oxygen-deficient iron oxide from the outside, resulting in the increase in the cost related to hydrogen supply.

Furthermore, in Patent Document 1, since expensive nano-sized magnetite is used, the decomposition cost of the carbon dioxide is high. Furthermore, since the generated carbon is not nanocarbon having a high additional value (> 1 µm), there is another issue that the economic efficiency of the carbon dioxide decomposition plant is low.

In Patent Document 2, various substances are involved in the hydrogen production reaction (a magnesium compound is also used in addition to magnetite serving as an iron compound), and the reaction mechanism is complicated. In addition, there is an issue that the amount of energy consumed is large, and the production cost is increased because of the high temperature required for the reaction (about 1,000°C).

Furthermore, Patent Document 2 focuses only on the effective use of waste heat discharged from various plants that consume a large amount of energy, and the effective use of carbon dioxide discharged together with the waste heat from many of such plants is also demanded.

The present invention has been made in consideration of the above-described circumstances, and an object of the present invention is to provide a method for producing carbon and hydrogen that enables the efficient generation of carbon and hydrogen from carbon dioxide and water, and the repeated generation and use of a reducing agent used in a reaction, a carbon material and the reducing agent, which are obtained by this method, and a method for decomposing carbon dioxide.

### [Solution to Problem]

In order to solve the above-described issues, the present invention proposes the following means.

That is, a method for producing carbon and hydrogen of the present invention includes a carbon dioxide decomposition step of reacting carbon dioxide with a reducing agent to generate magnetite that has a surface to which carbon adheres, a carbon separation step of reacting the magnetite that has a surface to which carbon adheres and is obtained in the carbon dioxide decomposition step with hydrochloric acid (aqueous solution of hydrogen chloride) or a hydrogen chloride gas to generate carbon and iron chloride, a hydrogen production step of reacting the iron chloride obtained in the carbon separation step with water to generate magnetite, hydrogen, and a hydrogen chloride gas, and a reducing agent regeneration step of reacting the magnetite and the hydrogen obtained in the hydrogen production step with each other to generate the reducing agent used in the carbon dioxide decomposition step, in which the reducing agent is an oxygen-deficient iron oxide represented by Fe₃O_{4-δ} (where, δ is 1 or more and less than 4) obtained by reducing magnetite while maintaining a crystal structure, an oxygen-completely deficient iron (δ = 4) obtained by completely reducing magnetite, an oxygen-deficient iron oxide obtained by reducing hematite or a used disposable warmer, or an oxygen-completely deficient iron obtained by completely reducing hematite or a used disposable warmer.

According to the present invention, a magnetite crystal structure is maintained, and the oxygen-deficient iron oxide, which has a large number of atomic vacancies due to the release of oxygen atoms, or the oxygen-completely deficient iron is used as the reducing agent to reduce carbon dioxide; thereby, carbon can be efficiently produced from the carbon dioxide at a low cost.

In addition, water can be efficiently decomposed by the reaction of water with iron chloride obtained in the carbon separation step at a low cost; thereby, high-purity hydrogen can be produced. In such a hydrogen production, the amount of hydrogen generated can be easily increased simply by increasing the amount of magnetite or iron chloride circulated.

In addition, in the present invention, in the carbon dioxide decomposition step, a reaction temperature may be in a range of 300°C or higher and 450°C or lower.

In addition, in the present invention, in the carbon dioxide decomposition step, a reaction pressure may be in a range of 0.01 MPa or more and 5 MPa or less.

In addition, in the present invention, in the carbon separation step, a reaction temperature may be in a range of 10°C or higher and 300°C or lower.

In addition, in the present invention, in the hydrogen production step, a reaction temperature may be in a range of 10°C or higher and 800°C or lower.

In addition, in the present invention, in the reducing agent regeneration step, a reaction temperature may be in a range of 300°C or higher and 450°C or lower.

In addition, in the present invention, a concentration of hydrogen used in the reducing agent regeneration step may be in a range of 5% by volume or more and 100% by volume or less.

In addition, in the present invention, in the reducing agent regeneration step, the magnetite may have a specific surface area in a range of 0.1 m²/g or more and 10 m²/g or less according to a BET method.

In addition, in the present invention, in the reducing agent regeneration step, the magnetite may have an average particle diameter (a volume cumulative average diameter (50% diameter), the same applies hereinafter) in a range of 1 µm or more and 1,000 µm or less.

In addition, in the present invention, in the reducing agent regeneration step, the magnetite may have a bulk density in a range of 0.3 g/cm³ or more and 3 g/cm³ or less.

In addition, in the present invention, the carbon is nano-sized carbon having a particle diameter of 1 µm or less.

A carbon material of the present invention is produced by the method for producing carbon and hydrogen according to each clause described above.

A reducing agent of the present invention is generated in the reducing agent regeneration step in the method for producing carbon and hydrogen according to each clause described above.

A method for decomposing carbon dioxide of the present invention includes reacting a reducing agent with carbon dioxide to decompose the carbon dioxide, the reducing agent being an oxygen-deficient iron oxide represented by Fe₃O_{4-δ} (where, δ is 1 or more and less than 4) obtained by reducing magnetite while maintaining a magnetite crystal structure or an oxygen-completely deficient iron (δ = 4) obtained by completely reducing magnetite.

### [Advantageous Effects of Invention]

According to the present invention, it is possible to provide the method for producing carbon and hydrogen that enables the efficient generation of carbon and hydrogen from carbon dioxide and water, and the repeated generation and use of the reducing agent used in the reaction, the carbon material and the reducing agent, which are obtained by this method, and the method for decomposing carbon dioxide that enables carbon dioxide to be decomposed with high reaction efficiency using the reducing agent with high reducing ability.

### [Brief Description of Drawings]

FIG. 1 is a schematic diagram showing a crystal structure of a quarter unit lattice of magnetite.
FIG. 2 is a flow chart showing a method for producing carbon and hydrogen according to an embodiment of the present invention.
FIG. 3 is a graph showing the results of Example 1.
FIG. 4 is a graph showing the results of Example 2.
FIG. 5 is a graph showing the results of Example 3.
FIG. 6 is a graph showing the results of Example 4.
FIG. 7 is a graph showing the results of Example 5.
FIG. 8 is a graph showing the results of Example 6.
FIG. 9 is a graph showing the measurement results of an oxygen deficiency δ of Example 7.
FIG. 10 is a graph showing the measurement results of an oxygen defect consumption rate of Example 7.
FIG. 11 is a graph showing the measurement results of an oxygen deficiency δ of Example 8.
FIG. 12 is a graph showing the measurement results of an oxygen defect consumption rate of Example 8.
FIG. 13 is a graph showing the results of using nanoparticle magnetite of Example 9.
FIG. 14 is a graph showing the results of using fine particle magnetite of Example 9.
FIG. 15 is a graph showing the results of using powder magnetite of Example 9.
FIG. 16 shows XRD analysis results of a specimen after hydrogen reduction in Example 10.
FIG. 17 shows XRD analysis results of a specimen after carbon dioxide decomposition in Example 10.
FIG. 18 shows XRD analysis results of a specimen after hydrogen reduction in Example 11.
FIG. 19 shows XRD analysis results of a specimen after carbon dioxide decomposition in Example 11.
FIG. 20 is an SEM photograph image of a product obtained after causing a reducing agent to react with carbon dioxide.

### [Description of Embodiments]

Hereinafter, a method for producing carbon and hydrogen, a carbon material, a reducing agent, and a method for decomposing carbon dioxide according to an embodiment of the present invention will be described with reference to the drawings. Embodiments described below are specifically described for a better understanding of the gist of the invention and do not limit the present invention unless otherwise specified. In addition, in the drawings used in the following description, for convenience, a portion serving as a main part may be enlarged in some cases in order to make the features of the present invention easy to understand, and a dimensional ratio or the like of each component is not always the same as an actual one.

First of all, the reducing agent used in the method for producing carbon and hydrogen of the present embodiment will be described.

The reducing agent is a material that reacts with carbon dioxide to reduce the carbon dioxide and decompose the carbon dioxide into carbon and oxygen in a carbon dioxide decomposition step S1 described later. As the reducing agent used in the present embodiment, an oxygen-deficient iron oxide of magnetite (triiron tetraoxide) represented by Fe₃O_{4-δ} (where, δ is 1 or more and less than 4), an oxygen-deficient iron oxide obtained from hematite or a used disposable warmer (main component is iron hydroxide), or an oxygen-completely deficient iron is used.

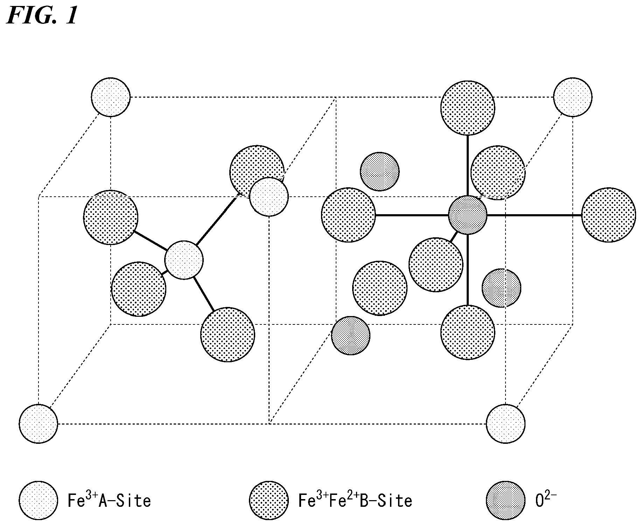

FIG. 1 is a schematic diagram showing a crystal structure of a quarter unit lattice of magnetite.

In terms of crystallography, magnetite has a spinel-type crystal lattice structure, where oxygen ions (O²⁻) are arranged in a cubic closest packing, and a +3 valent iron (Fe⁺³) and a +2 valent iron (Fe²⁺) are arranged at a ratio of 2:1 in the gaps (the A site and the B site). Magnetite is represented by Fe₃O₄ as a general formula.

The reducing agent used in the present embodiment is an oxygen-deficient iron oxide (1 ≤ δ < less than 4) that is obtained by releasing oxygen ions at any positions shown in FIG. 1 with such a magnetite crystal structure, that is, a spinel-type crystal lattice structure maintained, or an oxygen-completely deficient iron (δ = 4) that is obtained by completely reducing magnetite, or an oxygen-deficient iron oxide that is obtained by reducing hematite or a used disposable warmer, or an oxygen-completely deficient iron that is obtained by completely reducing hematite or a used disposable warmer. Such a reducing agent is generated in a reducing agent regeneration step S4 described later.

The oxygen-deficient iron oxide obtained by reducing magnetite is represented by Fe₃O₄₋₆, where δ is in a range of 1 or more and less than 4 depending on a release rate of oxygen ions (O²⁻) released from magnetite. In addition, all the oxygen ions in magnetite are released (that is, δ = 4) to become an oxygen-completely deficient iron described above.

δ is referred to as the oxygen deficiency, which is a ratio of the defected oxygen to the magnetite in the oxygen-deficient iron oxide with the magnetite crystal structure, that is, the spinel-type crystal lattice structure maintained. Regarding such oxygen deficiency δ, according to the fact that the difference between the mass of magnetite before reacting with hydrogen in the reducing agent regeneration step S4 and the mass of the magnetite after the reaction is measured to obtain the amount of mass reduction (the difference), and the amount of mass reduction is equal to the amount of oxygen released from the magnetite (the arrangement positions of the released oxygen in the lattice becomes atomic vacancies, that is, defects), the oxygen deficiency δ (δ = 1 to 4) can be calculated from the amount of mass reduction.

The sites from which oxygen ions have been released from the magnetite become atomic vacancies with the spinel-type crystal lattice structure maintained. Thus, as many cations as the released oxygen ions are confined in the crystal lattice, thereby the lattice spacing expanding. Atomic vacancies generated by such release of oxygen cause, as a reducing agent, a deoxygenation reaction (reduction reaction) of carbon dioxide.

The reducing agent (the oxygen-deficient iron oxide or the oxygen-completely deficient iron) according to the present embodiment may have an average particle diameter more than 1 µm, preferably has an average particle diameter of 1 µm or more and less than 20 µm, and also preferably has an average particle diameter more than 50 µm and less than 200 µm.

In a case where the average particle diameter of the reducing agent is less than 1 µm, the generation rate of carbon monoxide increases during the decomposition of carbon dioxide, resulting in the decrease in the carbon recovery rate according to the experimental results. The use of the reducing agent having an average particle diameter of 1 µm or more enables a high carbon capture rate to be maintained while making reducing agent particles less likely to agglomerate. Therefore, a trouble such as a phenomenon of sticking to wall surfaces of a reaction device can be avoided, and the application to industrial reaction devices such as rotary kilns can be implemented.

Furthermore, a high reaction rate can be maintained by setting the average particle diameter of the reducing agent to less than 20 µm. In addition, in a case where the average particle diameter of the reducing agent is more than 50 µm and 200 µm or less, the dustability of the particles is reduced, and the fluidization performance is improved. Therefore, the application to industrial reaction devices such as fluidized beds can be implemented. In this case, as compared to a rotary kiln-type reaction device, solid-gas contact or heat transfer is favorable, a facility cost is low, and the size of the reaction device can be made compact.

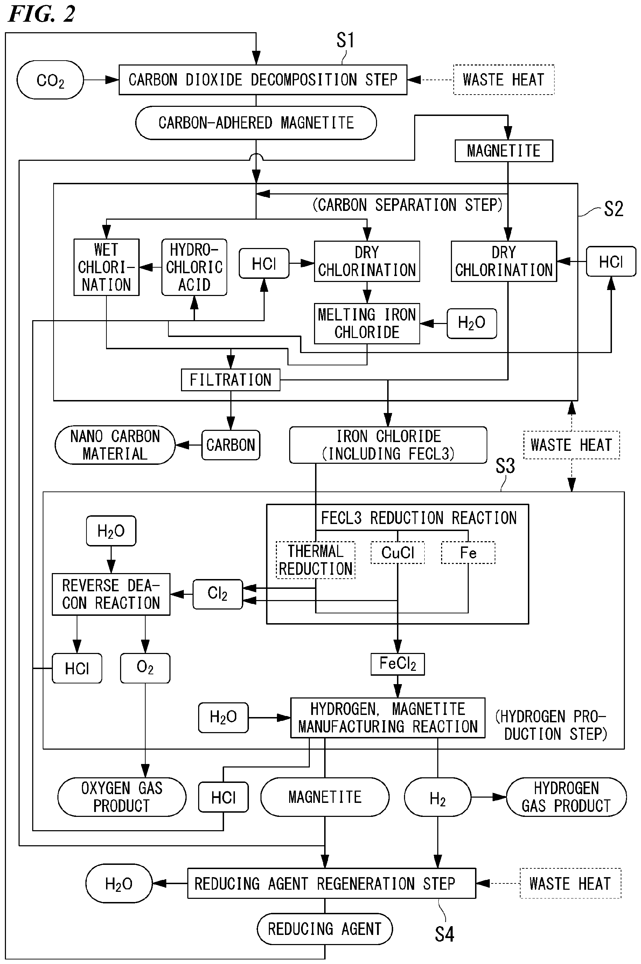

FIG. 2 is a flow chart stepwise showing the method for producing carbon and hydrogen, including the method for decomposing carbon dioxide according to the embodiment of the present invention.

The method for producing carbon and hydrogen of the present embodiment includes a carbon dioxide decomposition step S1 of generating magnetite that has a surface to which carbon adheres, a carbon separation step S2 of generating carbon and iron chloride, and a hydrogen production step S3 of generating magnetite, hydrogen, and a hydrogen chloride gas, and a reducing agent regeneration step S4 of generating a reducing agent. In addition, the method for decomposing carbon dioxide of the present embodiment includes the carbon dioxide decomposition step S1. In each of such steps, carbon and hydrogen are produced from carbon dioxide and water which are supplied from the outside by using magnetite and a reducing agent obtained by reducing the magnetite in a circulation manner.

### (Carbon Dioxide Decomposition Step S1)

In the carbon dioxide decomposition step S1, a powdery reducing agent having, for example, an average particle diameter of about 1 µm to 500 µm comes into contact with gaseous carbon dioxide while stirring the powdery reducing agent by using, for example, a reaction device (a carbon dioxide decomposition furnace) such as a rotary kiln or an air bubbling fluidized bed to decompose (reduce) the carbon dioxide. Then, the magnetite that has a surface to which carbon adheres is generated.

As the reaction device used in the carbon dioxide decomposition step S1, a circulating fluidized bed can also be used; however, it has the following disadvantages as compared with the air bubbling fluidized bed, for example, the height of the entire reaction device is high, the facility cost is high, the design and operation of the particle recirculation loop are complicated, the retention time of the particles are short (the retention time in the reaction device is on the order of seconds), the particle diameter of the reducing agent that can be used is limited, the abrasion of the particles is accelerated, and the energy costs required for maintaining a high gas flow rate and circulating a powder are large.

As a supply source of the carbon dioxide used in the carbon dioxide decomposition step S1, carbon dioxide discharged from facilities that discharge a large amount of carbon dioxide, such as steel plants, thermal power plants, cement factories, garbage incineration facilities, biogas generation facilities, and natural gas wells may be used. In addition, the reducing agent is supplied from the reducing agent regeneration step S4 described later.

The reaction temperature in the carbon dioxide decomposition step S1 may be in a range of 300°C or higher and 450°C or lower, and preferably in a range of 350°C or higher and 400°C or lower.

In this way, the setting of the reaction temperature in a range of 300°C or higher and 450°C or lower enables the reducing agent to maintain the spinel-type crystal lattice structure. In a case where the reaction temperature is as high as, for example, 500°C or higher, there is a concern that the reducing agent cannot maintain the spinel-type crystal lattice structure due to repeated use of magnetite. There is also another concern that the energy consumed during the reaction increases.

In the carbon dioxide decomposition step S1, in order to raise the temperature to such a reaction temperature range, it is also preferable to effectively use, as a heat source, the heat (waste heat) generated in association with the operation of steel plants, thermal power plants, cement factories, garbage incineration facilities and the like ,which are carbon dioxide supply sources; the thermal energy of renewable energy; and thermal energy of the high-temperature gas-cooled reaction device which is a nuclear reaction device capable of extracting the high temperature heat.

The reaction pressure in the carbon dioxide decomposition step S1 may be any reaction pressure in a range of 0.01 MPa or more and 5 MPa or less, and preferably in a range of 0.1 MPa or more and 1 MPa or less.

In a case where the reaction pressure is 0.01 MPa or more, the reaction rate required for a practical process can be obtained, and furthermore, in a case of 0.1 MPa or more, it is possible to directly deal with actual exhaust gas having a low carbon dioxide concentration. In addition, in a case where the reaction pressure is 5 MPa or less, the manufacturing cost of a reaction device can be suppressed.

In the carbon dioxide decomposition step S1, the decomposition rate of carbon dioxide is increased by the increase in the reaction temperature and reaction pressure, and the efficiency of carbon dioxide treatment can be thus increased. On the other hand, in a case where the reaction temperature is too high, there is a risk that the spinel structure of the reducing agent is destroyed.

When carbon dioxide is decomposed in the carbon dioxide decomposition step S1, a reaction of two stages represented by Formulae (1) and (2) and a reaction of one stage represented by Formula (3) occur.

CO₂ → CO (intermediate product) + O²⁻ ... (1)

CO —> C + O²⁻ ... (2)

CO₂ —> C + 2O²⁻ ... (3)

Then, oxygen generated according to Formulae (1), (2), and (3) is inserted into atomic vacancies of the oxygen-deficient iron oxide (Formulae (4)) or the oxygen-completely deficient iron (Formula (5)) according to Formulae (4) and (5). Fe₃O_{4-δ} + δO²⁻ → Fe₃O₄ (where, δ is 1 or more and less than 4) ... (4) 3Fe + 4O²⁻ → Fe₃O₄ ... (5)

In the method for decomposing carbon dioxide of the present embodiment, only Formula (1) can be also carried out in the carbon dioxide decomposition step S1. The obtained carbon monoxide (CO) can be used as a raw material for obtaining useful chemical products such as hydrocarbons such as methane and methanol, and various resins, with the addition of hydrogen.

In the above-described reaction in the carbon dioxide decomposition step S1, in a case where all the carbon dioxide is reacted up to Formula (2) or by Formula (3), the generation of gas as a final product is not accompanied. That is, it is conceived that all the oxygen in the carbon dioxide is incorporated into the oxygen-deficient iron oxide or the oxygen-completely deficient iron. Taking this into account, the reaction between carbon dioxide and an oxygen-deficient iron oxide is represented by Formula (6), and the reaction between carbon dioxide and an oxygen-completely deficient iron is represented by Formula (7).

2Fe₃O_{4-δ} + δCO₂ → 2Fe₃O₄ δC (carbon-adhered magnetite, where, δ = 1 or more and less than 4) ... (6)

3Fe + 2CO₂ → Fe₃O₄·2C (carbon-adhered magnetite) ... (7)

The reason why the oxygen-deficient iron oxide and the oxygen-completely deficient iron, which are used as reducing agents in the carbon dioxide decomposition step S1, can decompose carbon dioxide into carbon is that these reducing agents have a spinel-type crystal lattice structure, which is a metastable crystal structure that is formed in a non-equilibrium state, and thus tend to gradually react with oxygen even at room temperature and incorporate oxygen ions, thereby changing to more stable Fe₃O₄. That is, it is conceived to be because the unstable spinel-type crystal lattice structure having atomic vacancies in the lattice tends to change to a more stable spinel-type crystal lattice structure having no atomic vacancies.

In such a process of stabilization (magnetitization) of the oxygen-deficient iron oxide or the oxygen-completely deficient iron, a crystal tends to maintain electrical neutrality in a case where oxygen ions are incorporated into the crystal, and electrons thus tend to be released from the crystal surface. In the oxygen-deficient iron oxide or the oxygen-completely deficient iron, a +2 valent Fe (Fe²⁺) is present as an atom that can release electrons; however, it is conceived that a reduction potential different from that of the normal state is generated because the instability of the crystal of the oxygen-deficient iron oxide or the oxygen-completely deficient iron.

In the carbon dioxide decomposition step S1, it is preferable that the oxygen concentration in the reaction environment is set to be kept at 5% by volume or less in order to maximize the ability to decompose carbon dioxide by the oxygen-deficient iron oxide or the oxygen-completely deficient iron, which is used as a reducing agent.

In a case where the oxygen concentration in the reaction environment in the carbon dioxide decomposition step S1 is higher than 5% by volume, there is a concern that the oxygen in the reaction atmosphere is incorporated into the oxygen-deficient site of this reducing agent before the oxygen constituting carbon dioxide is incorporated into the reducing agent (the oxygen-deficient iron oxide or the oxygen-completely deficient iron), thereby the ability of the reducing agent to decompose carbon dioxide being lowered.

The carbon generated by the decomposition of carbon dioxide in the carbon dioxide decomposition step S 1 is generated as nano-sized carbon having a particle diameter of 1 µm or less. In the carbon dioxide decomposition step S 1, under the same temperature condition, the reaction rate of Formula (1) described above is slower than the reaction rate of Formula (2); however, the reaction of Formula (2) proceeds rapidly by the increase in the reaction rate of Formula (1), and fine nano-sized carbon particles can be generated. The reaction rates of Formula (1) and Formula (2) can be increased by the increase in the oxygen deficiency δ and the increase in the reaction temperature and the reaction pressure.

Such nano-sized carbon is generated so as to adhere to the surface of the magnetite that is generated by the oxidation of the oxygen-deficient iron oxide or the oxygen-completely deficient iron or cover the surface of the magnetite. The magnetite having the surface to which carbon adheres is transferred to the subsequent carbon separation step S2.

On the other hand, in the present embodiment, the reducing agent becomes magnetite (Fe₃O₄) through the decomposition of carbon dioxide in the carbon dioxide decomposition step S1, resulting in the generation of no hematite (Fe₂O₃).

In the present embodiment, the carbon is generated in a state of relatively firmly adhering to the surface of the magnetite.

### (Carbon Separation Step S2)

The carbon separation step S2 is composed of a chloride reaction of magnetite (conversion of magnetite into iron (III) chloride (FeCl₃) and iron (II) chloride (FeCl₂)) and a carbon capture operation.

The chloride reaction of magnetite includes a wet chlorination method using hydrochloric acid dissolution and a dry chlorination method using a hydrogen chloride gas.

### (Wet Chlorination)

In a case where the chloride reaction of magnetite is carried out by wet chlorination, the magnetite that has a surface to which carbon adheres and is obtained in the carbon dioxide decomposition step S1 is reacted with hydrochloric acid (aqueous solution of hydrogen chloride) to dissolve the magnetite in hydrochloric acid; thereby, carbon that is insoluble in hydrochloric acid is separated from the magnetite. The magnetite dissolved in the hydrochloric acid reacts with hydrogen chloride to generate iron chloride (iron (III) chloride and iron (II) chloride) and water.

The magnetite dissolved in hydrochloric acid and carbon may be separated by, for example, solid-liquid separation such as filtration. In addition, the generated iron chloride (a mixture of iron (III) chloride and iron (II) chloride) is transferred to the subsequent hydrogen production step S3. In the case of such wet chlorination, all the generated iron oxide can be dissolved, and carbon can be separated.

As the hydrochloric acid used in the carbon separation step S2 (wet chlorination), hydrochloric acid having a hydrogen chloride concentration in a range of, for example, 5% by mass to 37% by mass may be used.

In a case where the hydrogen chloride concentration of the hydrochloric acid is less than 5% by mass, there is a concern that the reaction may be slow. In addition, in a case where a concentrated hydrochloric acid having a concentration of hydrochloric acid more than 37% by mass, the volatilization rapidly occurs, and handling is poor.

The reaction temperature in the carbon separation step S2 (wet chlorination) may be in a range of 10°C or higher and 150°C or lower, and preferably in a range of 50°C or higher and 100°C or lower.

In a case where the reaction temperature is lower than 10°C, the reaction rate is slow, and cooling equipment is required. In a case where the reaction temperature is higher than 150°C, a large amount of energy is consumed, and the solution evaporates, which is inefficient.

In the carbon separation step S2 (wet chlorination), in order to increase the reaction temperature within such a reaction temperature range, for example, the same heat sources as in the carbon dioxide decomposition step S1 are also preferably effectively used.

The chloride reaction of magnetite in the carbon separation step S2 (wet chlorination) is represented by Formulae (8) and (9) described below.

2Fe₃O₄·δC + 16HCl → 4FeCl₃ + 2FeCl₂ + 8H₂O + δC (wet chlorination: 10°C to 150°C) (where, δ = 1 to 4) ... (8)

2Fe₃O₄ + 16HCl → 4FeCl₃ + 2FeCl₂ + 8H₂O (wet chlorination: 10°C to 150°C) ... (9)

### (Dry Chlorination)

In a case where the chloride reaction of magnetite is carried out by dry chlorination, the magnetite that has a surface to which carbon adheres and is obtained in the carbon dioxide decomposition step S1, or the magnetite obtained in the hydrogen production step S3 is reacted with a hydrogen chloride gas to generate iron chloride (iron (III) chloride and iron (II) chloride) and water.

As the hydrogen chloride gas used in the carbon separation step S2 (dry chlorination), a hydrogen chloride gas having a hydrogen chloride concentration in a range of, for example, 50% by mass to 100% by mass may be used.

In a case where the hydrogen chloride concentration is less than 50% by mass, there is a concern that the reaction may be slow.

The reaction temperature in the carbon separation step S2 (dry chlorination) may be in a range of 50°C or higher and 300°C or lower, and preferably in a range of 80°C or higher and 200°C or lower.

In a case where the reaction temperature is lower than 50°C, the reaction rate is slow. In addition, in a case where the reaction temperature is higher than 300°C, a large amount of energy is consumed, and the efficiency decreases, as well as the chloride reaction is an exothermic reaction, so that the proceeding of the reaction at a high temperature is disadvantageous.

In the carbon separation step S2 (dry chlorination), in order to increase the reaction temperature within such a reaction temperature range, for example, the same heat sources as in the carbon dioxide decomposition step S1 are also preferably effectively used.

The chloride reaction of magnetite in the carbon separation step S2 (dry chlorination) is represented by Formulae (8) and (9) described below.

2Fe₃O₄·δC + 16HCl → 4FeCl₃ + 2FeCl₂ + 8H₂O + δC (dry chlorination: 50°C to 300°C) (where, δ = 1 to 4) ... (8)

2Fe₃O₄ + 16HCl → 4FeCl₃ + 2FeCl₂ + 8H₂O (dry chlorination: 50°C to 300°C) ... (9)

In order to reduce energy consumption, the magnetite to which no carbon adheres (the magnetite that is circulated for simple hydrogen production and obtained in the hydrogen production step S3) is preferably subjected to such dry chlorination using a hydrogen chloride gas. In the case of dry chlorination, it is possible to separate carbon as an insoluble component by converting the carbon-adhered magnetite into iron chloride with the hydrogen chloride gas and thereafter dissolving a product in water.

The carbon (carbon material) separated from the magnetite in the carbon separation step S2 is nano-sized carbon having a particle diameter of 1 µm or less, and those having a particle diameter of more than 1 µm are hardly generated. Such nano-sized carbon powder is, for example, high-purity carbon having a purity of 99% or more, and can be directly used as carbon black and activated carbon for functional carbon materials such as rubber reinforcing additives, battery materials, toners, coloring agents, conductive materials, catalysts, adsorbents, or used as a reducing agent for a coke substitute in the steelmaking and the like. In addition, nano-sized carbon can be used as a raw material for producing carbon materials such as artificial graphite, carbon fiber, and carbon nanotubes.

### (Hydrogen Production Step S3)

The hydrogen production step S3 carries out, by using a solid-gas reaction device such as a rotary kiln or a fluidized bed, a reduction reaction (reduction from iron (III) chloride to iron (II) chloride) of iron (III) chloride obtained in the carbon separation step S2, operations such as concentration, drying, and granulation of an iron (II) chloride solution, and a reaction for generating magnetite, hydrogen, and hydrogen chloride by iron (11) chloride reacting with water. The magnetite generated in this hydrogen production step S3 is transferred to the subsequent reducing agent regeneration step S4. In addition, the hydrogen chloride can be used as a raw material for producing the hydrochloric acid used in the carbon separation step S2.

In the operations such as concentration, drying, and granulation of the iron (II) chloride solution, iron (II) chloride particles having a predetermined particle diameter are produced by using a device such as a membrane separation device, an evaporator, a crystallization device, or a spray dryer, and thereafter, also provided to a reaction for producing hydrogen and magnetite.

The reduction of iron (III) chloride is carried out by, for example, a thermal reduction method for thermally decomposing iron (III) chloride at a high temperature and a reduction method for adding a reducing agent (CuCl, Fe, or the like) at a low temperature.

### (Thermal Reduction Method)

Details of the reduction reaction of iron (III) chloride by the thermal reduction method in the hydrogen production step S3 are shown in Formulae (10) and (11).

4FeCl₃ → 4FeCl₂ + 2Cl₂ (reduction of iron (111) chloride: 300°C to 600°C) ... (10)

2Cl₂ + 2H₂O → 4HCl + O₂ (reverse Deacon reaction: 400°C to 800°C) ... (11)

The reverse Deacon reaction of Formula (11) is not necessarily carried out.

### (Reduction Method with CuCl)

Details of the reduction reaction of iron (III) chloride by a reduction method with CuCl in the hydrogen production step S3 are shown in Formulae (12) to (14).

4FeCl₃ + 4CuCl → 4FeCl₂ + 4CuCl₂ (reduction of iron (III) chloride: 10°C to 100°C) ... (12)

4CuCl₂ → 4CuCl + 2Cl₂ (reduction of CuCl₂: 300°C to 600°C) ... (13)

2Cl₂ + 2H₂O → 4HCl + O₂ (reverse Deacon reaction: 400°C to 800°C) ... (14)

The reverse Deacon reaction of Formula (14) is not necessarily carried out.

### (Reduction Method with Fe)

Details of the reduction reaction of iron (III) chloride by a reduction method with Fe in the hydrogen production step S3 are shown in Formula (15).

4FeCl₃ + 2Fe → 6FeCl₂ (reduction of iron (III) chloride: 10°C to 100°C) ... (15)

### (Reaction between Iron (11) Chloride generated by Each Reduction Method and Water: Production Reaction for Hydrogen and Magnetite)

The reaction temperature in the production reaction for hydrogen and magnetite, in which the iron (11) chloride generated in the reduction reaction of the iron (111) chloride is reacted with water by each of the reduction methods described above, may be in a range of 300°C or higher and 800°C or lower, and is preferably in a range of 400°C or higher and 600°C or lower. In the hydrogen production step S3, in order to increase the reaction temperature within such a reaction temperature range, for example, the same heat sources as in the carbon dioxide decomposition step S1 are also preferably effectively used.

In the reaction between iron (II) chloride and water in the hydrogen production step S3, a reaction of Formula (16) described below occurs.

3FeCl₂ + 4H₂O → Fe₃O₄ + 6HCl + H₂ ... (16)

Hydrogen obtained by such a reaction is, for example, high-purity hydrogen having a purity of 99% or more, and can be used in a hydrogen station for fuel cell vehicles (FCV), hydrogen power generation, and used as various industrial hydrogen sources.

Although part of hydrogen generated in the hydrogen production step S3 is used in the subsequent reducing agent regeneration step S4, in order to increase the amount of hydrogen to be extracted to the outside, magnetite (magnetite to which no carbon adheres) in the carbon separation step S2 can be additionally provided or iron chloride (FeCl₂) can be additionally provided in the hydrogen production step S3 to generate a larger amount of hydrogen than the hydrogen required in the reducing agent regeneration step S4, which enables the use as a hydrogen source with high-purity and low cost.

However, in a case where magnetite generated from the additionally provided iron compound (magnetite, iron chloride) in the hydrogen production step S3 is supplied to the reducing agent regeneration step S4, the amount of the magnetite is excessive, resulting in the increase in a process load of the reducing agent regeneration step S4. Therefore, the amount of the magnetite derived from the additionally provided iron compound may be extracted from the magnetite generated in the hydrogen production step S3, and the magnetite may be provided to the carbon separation step S2 without carbon adhering. That is, only the amount of magnetite required for the carbon dioxide decomposition step S1 is supplied to the reducing agent regeneration step S4, and the remaining amount is circulated through the carbon separation step S2 and the hydrogen production step S3. In this way, the amount of hydrogen generated in the hydrogen production step S3 can be increased without affecting the carbon dioxide decomposition step S1 and the reducing agent regeneration step S4.

For example, in the present embodiment, 25% by mass of the magnetite generated in the hydrogen production step S3 is supplied to the reducing agent regeneration step S4, and the remaining 75% by mass is supplied to the carbon separation step S2.

### (Reducing Agent Regeneration Step S4)

In the reducing agent regeneration step S4, the hydrogen and magnetite in the hydrogen production step S3 are reacted with each other to release oxygen ions contained in the magnetite (deoxygenation (reduction) reaction), and an oxygen-deficient iron oxide (Fe₃O_{4-δ} (where, δ is 1 or more and less than 4)) in which any position of the oxygen atoms of magnetite is vacant or an oxygen-completely deficient iron with the magnetite crystal structure, that is, the spinel-type crystal lattice structure maintained.

As the magnetite introduced in the reducing agent regeneration step S4, the magnetite obtained in the hydrogen production step S3 is used. However, the replenishment of the magnetite decreased during the initial stage of each step and the execution of each step may be carried out without limitation to pure magnetite, and may contain other substances.

As a raw material (magnetite material) of magnetite in a case where the magnetite is introduced from the outside, for example, iron sand which is a natural mineral, or iron sand which is contained in iron ore and used in steel plants or the like can be used. Magnetite can be easily obtained at a low cost by using these iron sands as the magnetite.

In addition, as the magnetite material, it is also possible to use hematite (red iron ore: Fe₂O₃), a used disposable wanner (main component is iron hydroxide) with the iron oxidation system, and the like.

The magnetite of the present embodiment has a specific surface area in a range of 0.1 m²/g or more and 10 m²/g or less, preferably in a range of 0.3 m²/g or more and 8 m²/g or less, and more preferably in a range of 1 m²/g or more and 6 m²/g or less according to a BET method.

In a case where the magnetite has a specific surface area of 0.1 m²/g or more, the contact area between solid and gas, which is necessary for the solid-gas reaction, can be ensured, and the reaction rate necessary for a practical process can be obtained. In addition, in a case where the specific surface area of magnetite is 10 m²/g or less, not only a high reaction rate can be ensured but also the generation rate of carbon monoxide when carbon dioxide is decomposed is low. Therefore, the carbon recovery rate can be improved.

The reducing agent obtained by the reduction of the magnetite in the reducing agent regeneration step S4 according to the present embodiment has a larger specific surface area than that of the magnetite before the reduction. The specific surface area of the reducing agent is 0.1 m²/g or more and 30 m²/g or less, preferably 0.3 m²/g or more and 25 m²/g or less, and more preferably 1 m²/g or more and 18 m²/g or less. The specific surface area of the reducing agent is also 1 time or more and 3 times or less, preferably 1 time or more and 2.5 times or less, and more preferably 1 time or more and 2.0 times or less with respect to the specific surface area of magnetite.

In addition, the magnetite according to the present embodiment has an average particle diameter in a range of 1 µm or more and 1,000 µm or less, preferably in a range of 1 µm or more and less than 20 µm, or in a range of more than 50 µm and 200 µm or less.

In a case where the magnetite has an average particle diameter of 1 µm or more, the generation rate of carbon monoxide when carbon dioxide is decomposed is low. Therefore, the carbon recovery rate can be improved. Furthermore, since the average particle diameter is set to be larger than 1 µm, the agglomeration property and dustability of the particles are reduced, resulting in the improvement of fluidity and handleability. Therefore, troubles such as a phenomenon of sticking to wall surfaces of a reaction device and the formation of clinker can be avoided, so that the application to industrial reaction devices such as rotary kilns or fluidized beds can be implemented.

In addition, in a case where the magnetite has an average particle diameter of 1,000 µm or less, the contact area between solid and gas, which is necessary for the solid-gas reaction, can be ensured, and the reaction rate necessary for a practical process can be obtained.

In addition, the magnetite of the present embodiment has a bulk density in a range of 0.3 g/cm³ or more and 3 g/cm³ or less, preferably in a range of 0.4 g/cm³ or more and 2 g/cm³ or less, and more preferably in a range of 0.5 g/cm³ or more and 1 g/cm³ or less.

In a case where the magnetite has a bulk density of 0.3 g/cm³ or more, the agglomeration property and dustability of the particles are reduced, and the fluidity is improved, so that the application to industrial reaction devices such as rotary kilns or fluidized beds can be implemented. In addition, in a case where the magnetite has a bulk density of 3 g/cm³ or less, the percentage of voids between particles and within the particles can be ensured, the reaction gas can easily diffuse into the particles, and the reaction rate necessary for a practical process can be obtained.

In the reducing agent regeneration step S4, for example, the powdery magnetite is brought into contact with hydrogen generated in the hydrogen production step S3 while being stirred by using a solid-gas reaction device such as a rotary kiln or a fluidized bed, thereby oxygen atoms constituting magnetite being released and reacting with hydrogen to generate water (water vapor). In addition, the magnetite from which the oxygen atoms have been released becomes an oxygen-deficient iron oxide, in which positions from which oxygen atoms have been released are vacant, or an oxygen-completely deficient iron with the magnetite crystal structure, that is, the spinel-type crystal lattice structure maintained.

In the reducing agent regeneration step S4, in a case where the magnetite material contains hematite, the hematite is reduced to be magnetite, and the magnetite is further reduced to the oxygen-deficient iron oxide or the oxygen-completely deficient iron.

The reaction temperature in the reducing agent regeneration step S4 may be any temperature in a range of 300°C or higher and 450°C or lower and preferably in a range of 350°C or higher and 400°C or lower.

In a case where the reaction temperature is 300°C or higher, the reaction rate necessary for a practical process can be obtained. Furthermore, in a case where the reaction temperature is 450°C of lower, a high reactivity can be maintained without the destruction of the crystal structure of the reducing agent during the reaction, and the reducing agent can be thus used repeatedly. In addition, the energy consumption during the reaction can be suppressed.

In the reducing agent regeneration step S4, in order to increase the reaction temperature within such a reaction temperature range, for example, the same heat sources as in the carbon dioxide decomposition step S1 are also preferably effectively used.

The reaction pressure in the reducing agent regeneration step S4 may be any reaction pressure in a range of 0.1 MPa or more and 5 MPa or less, and preferably in a range of 0.1 MPa or more and 1 MPa or less.

In a case where the reaction pressure is 0.1 MPa or more, the reaction rate necessary for a practical process can be obtained, and the size of the reaction device can be made compact. In addition, in a case where the reaction pressure is 5 MPa or less, the manufacturing cost of a reaction device can be suppressed.

The concentration of the hydrogen gas is used in the reducing agent regeneration step S4 may be any concentration in a range of 5% by volume or more and 100% by volume or less, and preferably in a range of 10% by volume or more and 90% by volume or less. Even in a case where the concentration of the hydrogen gas is, for example, about 90% by volume, there is substantially no significant difference in the reducing ability as compared to hydrogen gas having a concentration of 100% by volume. As a result, in a case where hydrogen gas having a concentration of about 90% by volume, which is lower in cost than hydrogen gas having a concentration of 100% by volume is used, it is possible to generate a reducing agent from magnetite at a low cost.

In the reduction of magnetite with hydrogen in the reducing agent regeneration step S4, a reducing agent is generated according to Formulae (17) and (18) described below.

Fe₃O₄ +δH₂ → Fe₃O_{4-δ} + 8H₂O (where δ = 1 or more and less than 4) ... (17)

Fe₃O₄ + 4H₂ → 3Fe+ 4H₂O ... (18)

Here, in order to maintain the activity of the obtained reducing agent, it is preferable to prevent the reducing agent from being oxidized due to, for example, the mixing of air into the reducing agent between processes from the reducing agent regeneration step S4 to the carbon dioxide decomposition step S1. For example, in a case where a configuration in which the reducing agent can be transferred while preventing air from being mixed in a sealed state is employed when the reducing agent is transferred from the reducing agent regeneration step S4 to the carbon dioxide decomposition step S1, the reducing agent obtained in the reducing agent regeneration step S4 can be supplied to the carbon dioxide decomposition step S1 without being oxidized.

In order to increase the generation efficiency of carbon generated in the carbon separation step S2, the carbon dioxide decomposition step S1 and the reducing agent regeneration step S4 are repeated two or more times to increase the carbon concentration of the carbon-adhered magnetite generated in the carbon dioxide decomposition step S1, and thereafter, the carbon separation step S2 and the hydrogen production step S3 can also be performed. Accordingly, nano-sized carbon can be more efficiently produced at a lower cost.

According to the method for producing a carbon material and hydrogen of the present embodiment as described above, it is possible to efficiently produce a carbon material from carbon dioxide at a low cost by reduction of carbon dioxide with the oxygen-deficient iron oxide (Fe₃O_{4-δ} (where δ = 1 or more and less than 4)), which has a large number of atomic vacancies due to the release of oxygen atoms with the magnetite crystal structure maintained or the oxygen-completely deficient iron (δ = 4), which is obtained by completely reducing magnetite, as a reducing agent.

In addition, water can be efficiently decomposed by the reaction of water with iron chloride obtained in the carbon separation step S2 at a low cost; thereby, high-purity hydrogen can be produced. In such hydrogen production, the amount of hydrogen generated can be easily increased by simply increasing the amount of magnetite circulated, which can be widely applicable to a hydrogen reduction iron manufacturing process in a next generation steel plant, a hydrogenation refining process in a refinery, carbon dioxide capture and utilization (CCU) technology, a hydrogen source for a hydrogen fuel cell, a hydrogen source for hydrogen power generation, and the like.

Then, the magnetite generated in the hydrogen production step S3 is supplied to the reducing agent regeneration step to regenerate the reducing agent by using the hydrogen generated in the hydrogen production step, so that a closed system for decomposing carbon dioxide to produce carbon materials, and also decomposing water to produce hydrogen with only the supply of carbon dioxide and water from the outside can be constructed.

The hydrogen and oxygen generated during each of the steps are produced in different steps, and do not come into contact with each other in one step. For example, hydrogen is generated in the hydrogen production step S3 and oxygen is generated in the carbon separation step S2, and these are not mixed with each other in the same reaction tank or the like. As a result, it is possible to stably carry out the reaction in each step without concern that oxygen and hydrogen may come into contact with each other to cause an explosive reaction.

The magnetite used for such a carbon material and in the method for producing hydrogen is used in a circulation manner while changing the substance form, such as being reduced to a reducing agent in the treatment. Therefore, even though magnetite is not supplied from the outside except for a loss content, it is possible to produce carbon and hydrogen at a low cost.

In addition, in the carbon separation step S2, the magnetite having the surface to which carbon adheres is dissolved in hydrochloric acid (aqueous solution of hydrogen chloride) to separate the carbon insoluble in hydrochloric acid, and a nano-sized carbon material having a particle diameter of 1 µm or less can be obtained.

In addition, in the carbon dioxide decomposition step S1, the carbon separation step S2, the hydrogen production step S3, and the reducing agent regeneration step S4, the heat (waste heat) generated in association with the operation of steel plants, thermal power plants, cement factories, garbage incineration facilities, and the like is effectively used as a heat source during the reaction, for example, so that it is possible to suppress the amount of waste heat released into the atmosphere, which contributes to the prevention of global warming. In addition, electricity and stored heat derived from renewable energy, and thermal energy of a high-temperature gas-cooled reaction device which is a nuclear reaction device capable of extracting the high-temperature heat are effectively used, so that it is possible to suppress CO₂ generation, which contributes to the carbon neutrality and the decarbonized society.

Although the embodiments according to the present invention have been described above, such an embodiment is presented as an example and is not intended to limit the scope of the invention. These embodiments can be implemented in various other forms, and various omissions, replacements, and changes can be made without departing from the gist of the invention. This embodiment and the modification example thereof are included in the scope and gist of the invention as well as in the scope of the invention described in the claims and equivalents thereof.

For example, although the general composition of magnetite is Fe₃O₄ in the above-described embodiments, such magnetite may be iron sand that contains other substances such as titanium (Ti). Such other substances, such as titanium, may contribute to the reduction of carbon dioxide as catalysts.

### [Examples]

Hereinafter, the effect of the present invention was verified.

First, Table 1 summarizes the property of each of the magnetite materials used in Examples 1 to 11 below.

**[Table 1]**

| Type of magnetite material | Particle diameter distribution (µm) | | | Specific surface area (m²/g) | Bulk density (g/cm³) |
|---|---|---|---|---|---|
| | 20% cumulative volume | 50% cumulative volume (volume cumulative average diameter) | 80% cumulative volume | | |
| Nanoparticle magnetite | 0.59 | 0.80 | 1.73 | 10.20 | 0.72 |
| Fine particle magnetite | 0.82 | 1.13 | 1.61 | 5.28 | 0.47 |
| Powder magnetite | 11.02 | 39.07 | 100.47 | 0.39 | 1.88 |
| Powder magnetite (large particle diameter) | 18.23 | 68.74 | 89.42 | 0.33 | 2.20 |
| Iron sand made in Japan | 2.10 | 4.90 | 10.91 | 3.55 | 2.35 |
| Iron sand made in New Zealand | 3.05 | 6.63 | 13.26 | 2.29 | 2.37 |
| Copper slag | 6.17 | 15.87 | 28.67 | 0.75 | 1.10 |
| Iron powder | 72.66 | 103.78 | 136.90 | 0.10 | 2.59 |
| Hematite | 0.52 | 1.29 | 2.41 | 3.96 | 0.59 |
| Used disposable warmer | 146.20 | 388.90 | 732.10 | 122.26 | 1.00 |

### (Example 1)

An experiment was carried out to examine the relationship between the reaction temperature and the oxygen deficiency δ in the reducing agent regeneration step.

1 g of magnetite (particle diameter distribution of 50 to 100 nm) reacted with hydrogen by using a fixed bed reaction device as a reaction device to generate a reducing agent which is obtained by reducing magnetite with the magnetite crystal structure maintained.

The reaction time was set to 1 hour, the hydrogen flow rate was set to 1.0 L/min, the hydrogen concentration was set to 100% by volume, and the reaction temperature was set at 280°C, 300°C, 320°C, 350°C, 360°C, and 370°C in each case, and magnetite was then reduced with hydrogen (deoxygenation reaction) to obtain a specimen (reducing agent) at each of the reaction temperatures. Then, the oxygen deficiency δ of the reducing agent was calculated from the reducing agents (oxygen-deficient iron oxides or oxygen-completely deficient irons) obtained at each of the reaction temperatures.

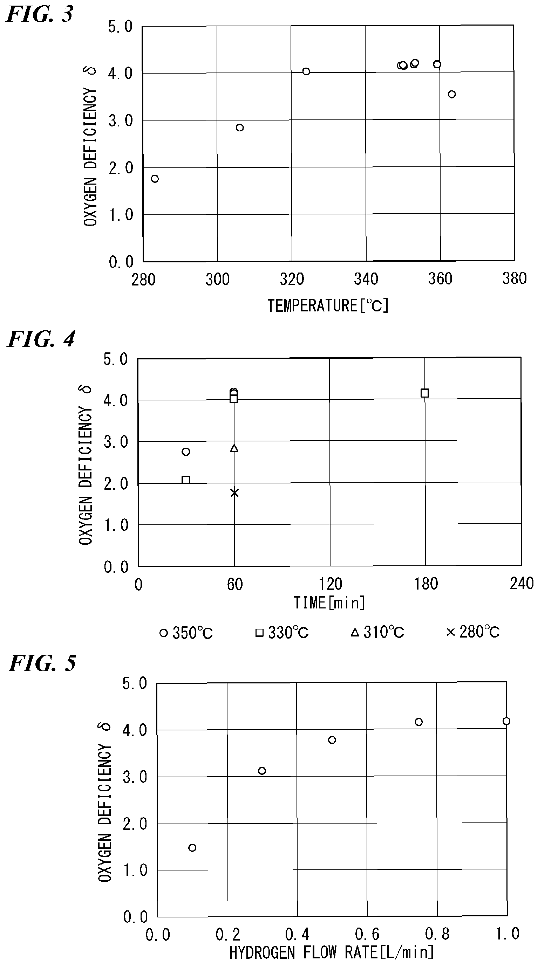

The results of Example 1 are shown as a graph in FIG. 3. The points at which the oxygen deficiency δ is more than 4 in FIG. 3 are measurement errors, and the points are substantially 4.

According to the results shown in FIG. 3, it was confirmed that the oxygen deficiency δ could be maximized by setting the reaction temperature to be in a range of 350°C to 360°C under the above-described reaction conditions, and δ = 4, that is, an oxygen-completely deficient iron in which all the oxygen ions were released with the magnetite crystal structure maintained was obtained.

### (Example 2)

An experiment was carried out to examine the relationship between the reaction time and the oxygen deficiency δ in the reducing agent regeneration step.

1 g of magnetite (particle diameter distribution of 50 to 100 nm) reacted with hydrogen by using a fixed bed reaction device as a reaction device to generate a reducing agent which is obtained by reducing magnetite with the magnetite crystal structure maintained.

The reaction temperature was set at 280°C, 310°C, 330°C, and 350°C in each case, the hydrogen flow rate was set to 1.0 L/min, and the hydrogen concentration was set to 100% by volume, the reaction time (reduction time) at each reaction temperature described above was set to 30 minutes, 60 minutes, and 180 minutes in each case, and the magnetite was then reduced with hydrogen (deoxygenation reaction) to obtain a specimen (reducing agent) at each reaction temperature and each reaction time. Then, the oxygen deficiency δ of the reducing agent was calculated from the reducing agents (oxygen-deficient iron oxides or oxygen-completely deficient irons) obtained in each case.

The results of Example 2 are shown as a graph in FIG. 4. The points at which the oxygen deficiency δ is more than 4 in FIG. 4 are measurement errors, and the points are substantially 4.

According to the results shown in FIG. 4, it was confirmed that the oxygen deficiency δ could be maximized by setting the reaction temperature to be in a range of 330°C to 350°C and setting the reaction time (reduction time) to be more than 60 minutes under the above-described reaction conditions, and δ = 4, that is, an oxygen-completely deficient iron in which all the oxygen ions were released with the magnetite crystal structure maintained was obtained. Furthermore, in a case where the reaction temperature is in a range of 330°C to 350°C, it could be confirmed that an oxygen-deficient iron oxide with the magnetite crystal structure of δ = 2 to 2.8 maintained was obtained even in a case where the reaction time (reduction time) was about 30 minutes.

### (Example 3)

An experiment was carried out to examine the relationship between the hydrogen flow rate and the oxygen deficiency δ in the reducing agent regeneration step.

1 g of magnetite (particle diameter distribution of 50 to 100 nm) reacted with hydrogen by using a fixed bed reaction device as a reaction device to generate a reducing agent which is obtained by reducing magnetite with the magnetite crystal structure maintained.

The reaction temperature was set to 330°C, the hydrogen concentration was set to 100% by volume, the reaction time was set to 60 minutes, and the hydrogen flow rate was set to 0.1 L/min, 0.25 L/min, 0.5 L/min, 0.75 L/min, and 1.0 L/min in each case, and magnetite was then reduced with hydrogen (deoxygenation reaction) to obtain a specimen (reducing agent) at each hydrogen flow rate. Then, the oxygen deficiency δ of the reducing agent was calculated from the reducing agents (oxygen-deficient iron oxides or oxygen-completely deficient irons) obtained in each case.

The results of Example 3 are shown as a graph in FIG. 5. The points at which the oxygen deficiency δ is more than 4 in FIG. 5 are measurement errors, and the points are substantially 4.

According to the result shown in FIG. 5, it was confirmed that the oxygen deficiency δ could be maximized by setting the hydrogen flow rate to 0.75 L/min or more under the above-described reaction conditions, and δ = 4, that is, an oxygen-completely deficient iron in which all the oxygen ions were released with the magnetite crystal structure maintained was obtained. Furthermore, it could be confirmed that an oxygen-deficient iron oxide with the magnetite crystal structure having δ = more than 3.5 maintained was obtained even in a case where the hydrogen flow rate was about 0.5 L/min.

### (Example 4)

An experiment was carried out to examine the relationship between the hydrogen concentration and the oxygen deficiency δ in the reducing agent regeneration step.

1 g of magnetite (particle diameter distribution of 50 to 100 nm) reacted with hydrogen by using a fixed bed reaction device as a reaction device to generate a reducing agent which is obtained by reducing magnetite with the magnetite crystal structure maintained.

The reaction temperature was set at 330°C, the hydrogen flow rate was set to 1.0 L/min, the reaction time was set to 60 minutes, and the hydrogen concentration was set to 50% by volume, 75% by volume, 90% by volume, 100% by volume in each case, and magnetite was then reduced with hydrogen (deoxygenation reaction) to obtain a specimen (reducing agent) at each hydrogen concentration. Then, the oxygen deficiency δ of the reducing agent was calculated from the reducing agents (oxygen-deficient iron oxides or oxygen-completely deficient irons) obtained in each case.

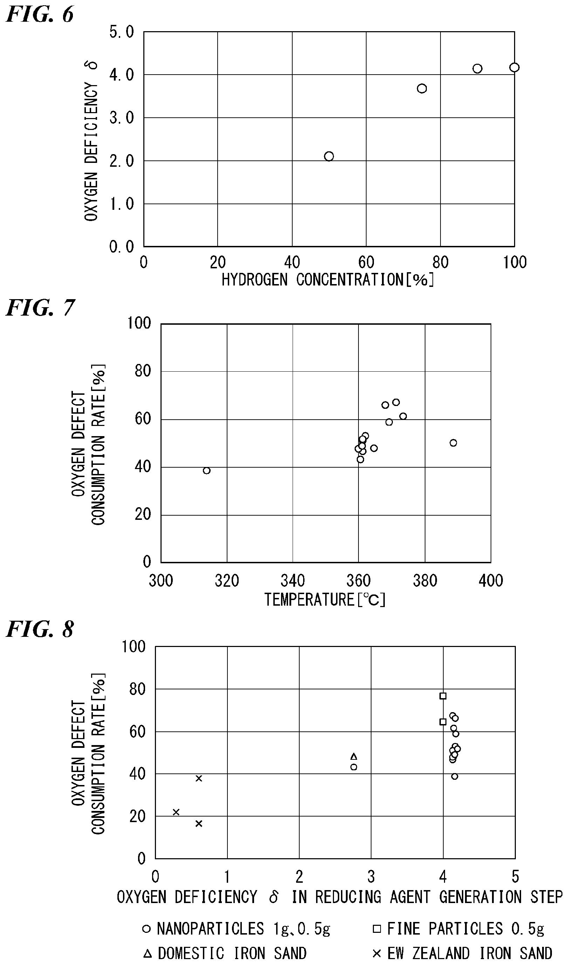

The results of Example 4 are shown as a graph in FIG. 6. The points at which the oxygen deficiency δ is more than 4 in FIG. 6 are measurement errors, and the points are substantially 4.

According to the result shown in FIG. 6, it was confirmed that the oxygen deficiency δ could be maximized by setting the hydrogen concentration to 90% by volume or more under the above-described reaction conditions, and δ = 4, that is, an oxygen-completely deficient iron in which all the oxygen ions were released with the magnetite crystal structure maintained was obtained. A reducing agent having the maximum oxygen deficiency δ can be generated at a low cost when a hydrogen gas having a concentration of about 90% by volume with a lower cost than a hydrogen gas having a concentration of 100% by volume is used because there is substantially almost no difference in the reducing ability of even the hydrogen gas having a concentration of 90% by volume from the hydrogen gas having a concentration of about 100% by volume. Furthermore,it could be confirmed that an oxygen-deficient iron oxide with the magnetite crystal structure having δ = more than 3.5 maintained was obtained even in a case where the hydrogen gas had a concentration of 75% by volume.

### (Example 5)

An experiment was carried out to examine the relationship between the reaction temperature and the oxygen defect consumption rate in the carbon dioxide decomposition step.

The oxygen defect consumption rate is a rate at which oxygen ions in carbon dioxide are incorporated into atomic vacancies in a lattice of a spinel-type crystal lattice structure of a reducing agent when a certain amount of reducing agent reacts with carbon dioxide, and the oxygen defect consumption rate indicates that the reducing agent has the higher ability to decompose (reduce) carbon dioxide as a value in a range of 0 to 100% is closer to 100%.

A reducing agent (an oxygen-completely deficient iron, and particle diameter distribution of 50 to 100 nm) having an oxygen deficiency δ of approximately 4 reacted with carbon dioxide at a reaction temperature in a range of 315°C to 390°C by using a fixed bed reaction device as a reaction device to generate carbon. Then, the oxygen defect consumption rate was calculated based on a difference between a mass of the reducing agent (magnetite) before the reaction and a mass of the oxidized reducing agent after the reaction, and a difference between an oxygen deficiency δ before the reaction and an oxygen deficiency δ after the reaction.

The results of Example 5 are shown as a graph in FIG. 7.

According to the results shown in FIG. 7, in a case where the reaction temperature is 360°C or higher under the reaction conditions described above, the oxygen defect consumption rate is 40% or more. In particular, in a case where the reaction temperature is 370°C or higher, the oxygen defect consumption rate is 50% or more, and the oxygen ions can be incorporated into carbon dioxide at 50% or more of the total number of atomic vacancies in the lattice of the spinel-type crystal lattice structure of the reducing agent. Therefore, it was confirmed that the reaction temperature in the carbon dioxide decomposition step was set to 360°C or higher, and the reducing agent was efficiently used to decompose carbon dioxide, thereby generating carbon.

### (Example 6)

An experiment was carried out to examine the relationship between the type of magnetite material, and the oxygen defect consumption rate in the carbon dioxide decomposition step and the oxygen deficiency δ in the reducing agent regeneration step.

As a magnetite material, 1 g and 0.5 g of nanoparticle magnetite having an average particle diameter of about 800 nm, 0.5 g of fine particle magnetite having an average particle diameter of about 1.1 µm, 1 g of iron sand made in Japan, and 1 g of iron sand made in New Zealand were prepared. Then, each magnetite material was used to be reduced to generate a reducing agent by using a fixed bed reaction device as a reaction device under the conditions of a reaction temperature of 350°C, a reaction time of 1 hour, a hydrogen flow rate of 1.0 L/min, and a hydrogen concentration of 100% by volume, and an oxygen deficiency δ of each reducing agent was calculated.

In addition, a specific surface area of the reducing agent obtained by reducing the fine particle magnetite was measured, and the result was 9.36 m²/g. It can be seen that the specific surface area has increased about 1.77 times from 5.28 m²/g before the reduction.

Next, each reducing agent reacted with carbon dioxide at a reaction temperature of 360°C by using a fixed bed reaction device as a reaction device, and the oxygen defect consumption rate was calculated based on a difference between the mass of the reducing agent before the reaction and the mass of the oxidized reducing agent after the reaction and a difference between the oxygen deficiency δ before the reaction and the oxygen deficiency δ after the reaction.

The results of Example 6 are shown as a graph in FIG. 8.

According to the results shown in FIG. 8, it could be confirmed that most of the reducing agents generated by reduction with hydrogen using the nanoparticle magnetite and the fine particle magnetite had an oxygen deficiency δ of 4, and the oxygen-completely deficient iron in which almost all the oxygen in the magnetite was released to form atomic vacancies was obtained. On the other hand, it was found that the iron sand made in New Zealand had an oxygen deficiency δ of less than 1 after the hydrogen reduction and had a low ability to decompose (reduce) carbon dioxide as a reducing agent.

In addition, it could be confirmed that the oxygen defect consumption rate of the reducing agent prepared using fine particle magnetite among these reducing agents was about 60% to 80%, and the ability to decompose carbon dioxide was thus particularly excellent.

From these results, it was found that the fine particle magnetite having an average particle diameter of about 1.1 µm was particularly preferably used as a magnetite material.

### (Example 7)

An experiment was carried out to examine the particle diameter of the magnetite material, the oxygen deficiency δ in the reducing agent regeneration step, and the oxygen defect consumption rate in the carbon dioxide decomposition step.

As magnetite materials, nanoparticle magnetite having an average particle diameter of about 800 nm, fine particle magnetite having an average particle diameter of about 1.1 µm, powder magnetite having an average particle diameter of about 40 µm, and large particle powder magnetite having an average particle diameter of about 70 µm were prepared. Then, each magnetite material was reduced under the condition of a reaction temperature of 330°C to generate a reducing agent, and an oxygen deficiency δ of each reducing agent was calculated. The conditions other than the reaction temperature are the same as in Example 6.

Next, each reducing agent was used to react with carbon dioxide at a reaction temperature of 380°C, and the oxygen defect consumption rate was calculated. The conditions other than the reaction temperature are the same as in Example 6.

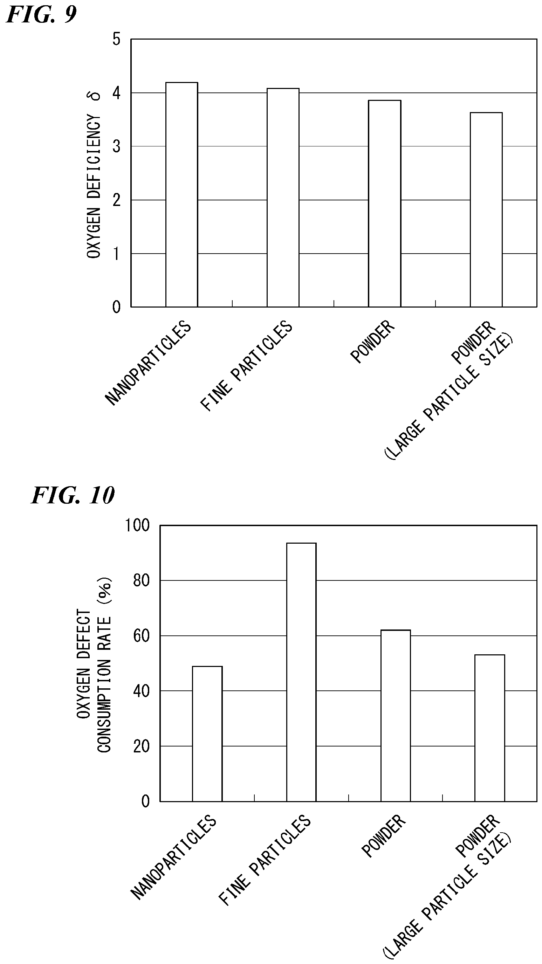

FIG. 9 shows the measurement results of the oxygen deficiency δ of Example 7, and FIG. 10 shows the measurement results of the oxygen defect consumption rate.

According to the results shown in FIG. 9, there was almost no difference between the reducing agents obtained by reduction with hydrogen depending on the particle diameter of the raw material magnetite. On the other hand, according to the results shown in FIG. 10, regarding the oxygen defect consumption rate after these reducing agents react with carbon dioxide, the reducing agent obtained from the fine particle magnetite as a raw material has a particularly excellent oxygen defect consumption rate. As a result, it was found that a reducing agent by using fine particle magnetite as a raw material was preferable.

### (Example 8)

An experiment was carried out to examine the relationship between the raw material of the reducing agent and the oxygen deficiency δ in the reducing agent regeneration step and the oxygen defect consumption rate in the carbon dioxide decomposition step.

As magnetite materials, nanoparticle magnetite having an average particle diameter of about 800 nm, fine particle magnetite having an average particle diameter of about 1 µm, powder magnetite having an average particle diameter of about 40 µm, iron sand made in Japan, iron sand made in New Zealand, copper slag, and iron powder were prepared. Under the same conditions as in Example 6, the oxygen deficiency δ of these reducing agents was then calculated. δ is set to 4 for convenience because the iron powder is in a completely reduced state.

Next, each reducing agent was used to react with carbon dioxide under the same conditions as in Example 6, and the oxygen defect consumption rate was calculated.

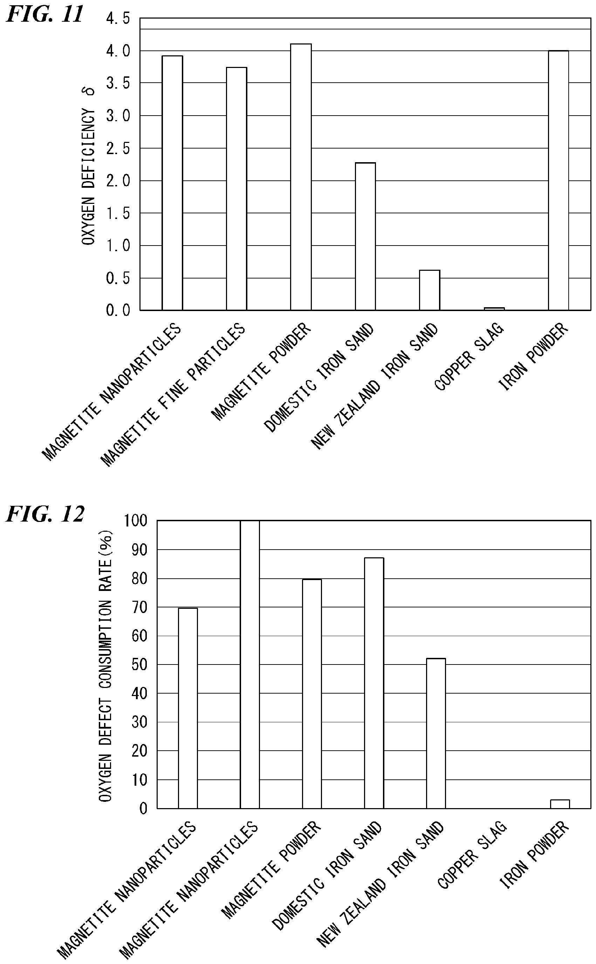

FIG. 11 shows the measurement results of the oxygen deficiency δ of Example 8, and FIG. 12 shows the measurement results of the oxygen defect consumption rate.

According to the results shown in FIG. 11, all the reducing agents obtained from magnetite as a raw material among the reducing agents obtained by the reduction with hydrogen have an excellent value of 3.5 or more. On the other hand, an oxygen deficiency δ of the copper slag is almost zero.

On the other hand, according to the results shown in FIG. 12, regarding the oxygen defect consumption rate after these reducing agents react with carbon dioxide, the reducing agent obtained from the fine particle magnetite as a raw material has a particularly excellent oxygen defect consumption rate. In addition, it was found that the copper slag and the iron powder each have an oxygen defect consumption rate of almost 0% and have no ability to decompose (reduce) carbon dioxide. The difference in an oxygen defect consumption rate between the domestic iron sand and the iron sand made in NZ is conceived to be caused by the catalytic effect of a small amount of titanium contained in the domestic iron sand.

### (Example 9)

An experiment was carried out to examine the presence or absence of the deterioration of the reducing agent and the amount of carbon generated in a case where the reducing agent regeneration step and the carbon dioxide decomposition step were repeatedly carried out for each particle diameter of the magnetite material.

A reducing agent was generated with the same magnetite material and the same reaction conditions as in Example 7, and the mass was measured (the reducing agent regeneration step).

Next, each reducing agent was used to decompose carbon dioxide at a reaction temperature of 380°C, and the mass of the reducing agent + the product (carbon) after the reaction was measured. The carbon separation step was not carried out after the carbon dioxide decomposition step, and the generated carbon was kept as it was. The reducing agent regeneration step and carbon dioxide decomposition step using each reducing agent were repeated three times, and the mass of the specimen was measured in each step.

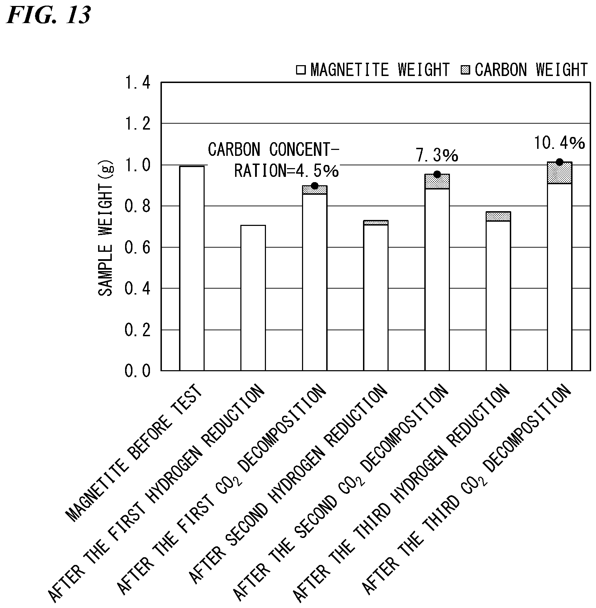

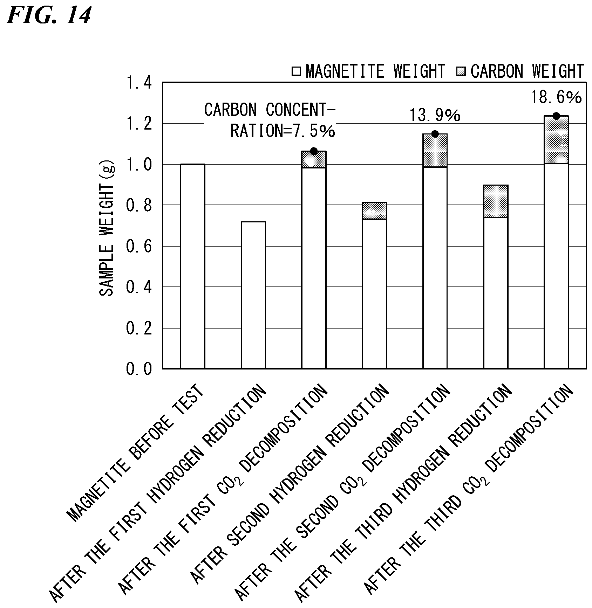

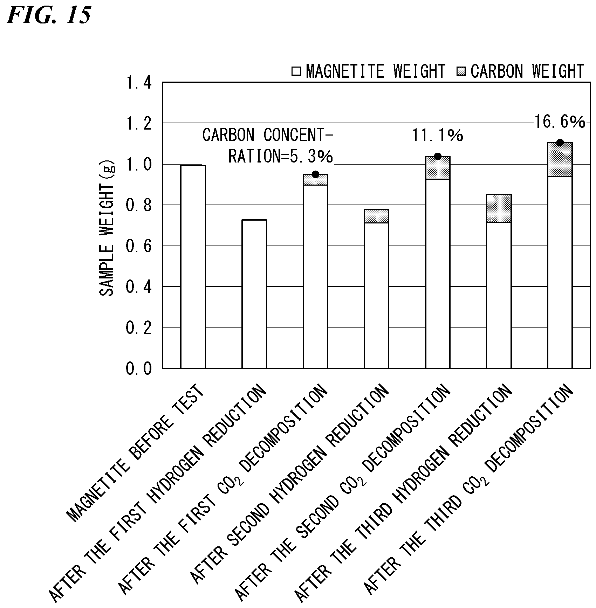

Regarding Example 9, FIG. 13 shows the results of using the nanoparticle magnetite, FIG. 14 shows the results of using the fine particle magnetite, and FIG. 15 shows the results of using the powder magnetite.

According to the results shown in FIG. 13 to FIG. 15, it was confirmed that even in a case where magnetite having any particle diameter was used as the raw material of the reducing agent, the mass of the carbon measured according to a combustion-infrared absorption method increases almost linearly every case in which the reducing agent regeneration step and the carbon dioxide decomposition step were repeated, and the reducing agent was not deteriorated, and the reducing agent regeneration step and the carbon dioxide decomposition step could be carried out a plurality of times by repeatedly using the reducing agent. In addition, it was confirmed that, in a case where the fine particle magnetite or the powder magnetite was used as a raw material for the reducing agent, the amount of increase in carbon mass was particularly large as compared to a case where the nanoparticle magnetite was used, and in consideration of the fact that the increased fraction was due to carbon accumulation, the fine particle magnetite or the powder magnetite was preferably used as a raw material of the reducing agent.

On the other hand, in a case where the nanoparticle magnetite is used as a raw material for the reducing agent, it is conceived that the mass of carbon is reduced by almost half in a case where the reducing agent regeneration step is carried out after the carbon dioxide decomposition step, and the generated carbon is gasified and removed outside the system. On the other hand, the loss due to the reaction of the generated carbon does not occur in the fine particle magnetite or the powder magnetite. From these facts, it was found that the generated and adhered carbon easily reacted with oxygen in the reducing agent or hydrogen in the reducing agent regeneration step because the nanoparticle magnetite had high reaction activity and a large surface area, and the carbon loss due to repeated use easily occurred. From the viewpoint of such loss due to the gasification of carbon as well, it was confirmed that the fine particle magnetite or the powder magnetite was preferably used as a raw material of the reducing agent.

### (Example 10)

An experiment was carried out to examine the decomposition performance for carbon dioxide in a case where hematite (Fe₂O₃) was used as the magnetite material.

Powdery α-Fe₂O₃ (average particle diameter of 1 µm, purity of 99.9% by mass (manufactured by Kojundo Chemical Lab. Co., Ltd.)) was used as a specimen, and as a pretreatment, the temperature was increased to 110°C in an argon gas flow state, followed by being held for 10 minutes, and air suction was then carried out in a vacuum state, which was further held for 10 minutes.

The pretreated specimen obtained in this way was used to be reduced to generate a reducing agent by using a fixed bed reaction device as a reaction device under the conditions of a reaction temperature of 330°C, a reaction time of 1 hour, a hydrogen flow rate of 1.0 L/min, and a hydrogen concentration of 100% by volume, and the mass was measured.

Table 2 shows the change in the mass of the specimen before the pretreatment, after the pretreatment, and after the hydrogen reduction. For the reference, the change in mass in a case where magnetite is used as the raw material is described.

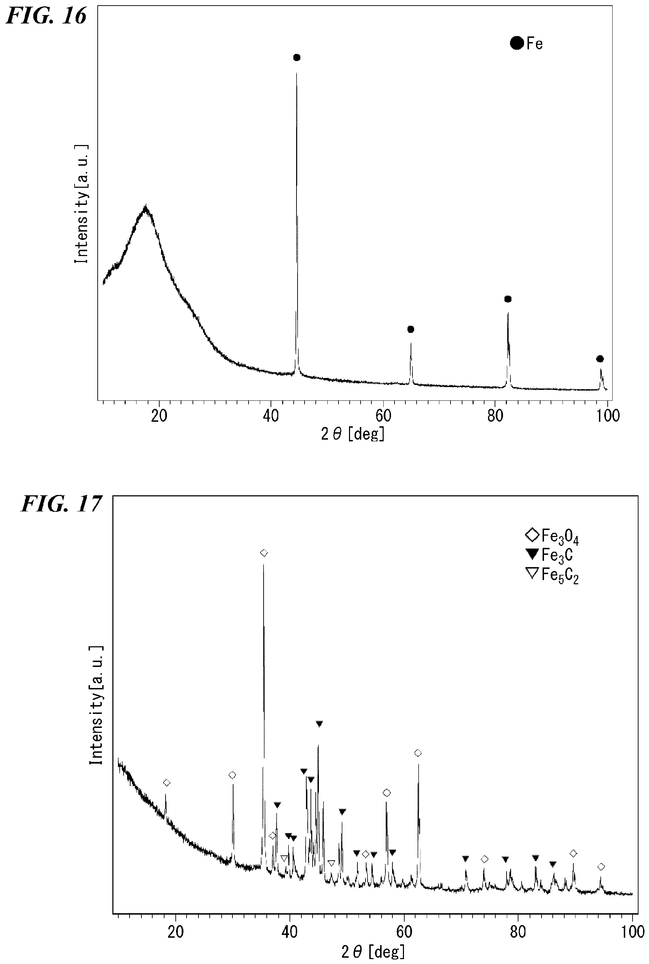

In addition, FIG. 16 shows the XRD analysis results of the specimen after the hydrogen reduction, and FIG. 17 shows the XRD analysis results of the specimen after the carbon dioxide decomposition.

**[Table 2]**

| Raw material of reducing agent | Before pretreatment (g) | After pretreatment (g) | After reduction (g) |
|---|---|---|---|
| Hematite | 1.000 | 0.996 | 0.697 |
| Magnetite | 1.001 | 0.995 | 0.705 |

According to the results shown in Table 2, it is conceived that from the weight change occurred from hydrogen reduction, hematite is completely reduced to the state of the oxygen-completely deficient iron.

In addition, according to the XRD analysis results, a product is mostly composed of Fe, and from these XRD analysis results as well, it is conceived that hematite has been completely reduced to the state of the oxygen-completely deficient iron.

Next, the obtained hematite-derived reducing agent was used to decompose carbon dioxide at a reaction temperature of 370°C until no pressure change occurred, the change in the amount of the substance in a gas phase part was calculated, by using the pressure and temperature in the reaction device, according to the state equation of the ideal gas, and the mass of a product (carbon) was measured according to the combustion-infrared absorption method (the carbon dioxide decomposition step).

Table 3 shows the change in the amount of the substance in a gas phase part after the decomposition of carbon dioxide, the mass of the product (carbon), and the change in the amount of the substance in a gas phase part per mole of iron in the reducing agent. For the reference, the result in a case where magnetite is used as the raw material is also described.

**[Table 3]**

| | Change in amount of substance in gas phase part [mol] | Amount of generated carbon [g] | Amount of substance of Fe [mol] | Change in amount of substance in gas phase part per mole of Fe |
|---|---|---|---|---|
| Hematite | -4.90E-03 | 0.059 | 1.25E-02 | -0.39 |
| Magnetite | -5.41E-03 | 0.065 | 1.29E-02 | -0.42 |

According to the results shown in Table 3, it was confirmed that carbon dioxide could be decomposed by using the reducing agent obtained by hydrogen reduction of hematite. From the fact that the color tone of the hematite-derived reducing agent after the decomposition of carbon dioxide was black and the XRD analysis results, it is conceived that even the hematite-derived reducing agent is oxidized only to magnetite (does not return to hematite) after the decomposition of carbon dioxide.

### (Example 11)

A powder containing iron hydroxide, which had been extracted from a used disposable warmer, was used as a raw material for generating a reducing agent and subjected to an experiment carried out to examine the decomposition performance for carbon dioxide.

"Poka-poka Family Regular 10 pieces (PKN-10R)" manufactured by IRIS OHYAMA Inc. was used as the used disposable warmer, and as a pretreatment, the temperature was increased to 110°C in an argon gas flow state, followed by being held for 10 minutes, and air suction was then carried out to be a vacuum state, which was further held for 10 minutes.

The used disposable warmer (powdery) after the pretreatment, obtained in this way, was reduced by using a fixed bed reaction device as a reaction device under the conditions of a reaction temperature of 330°C, a reaction time of 1 hour, a hydrogen flow rate of 1.0 L/min, and a hydrogen concentration of 100% by volume to generate a reducing agent, and the mass was measured.

Table 4 shows the changes in the mass of the specimen before the pretreatment and after the pretreatment, and before the hydrogen reduction and after the hydrogen reduction.

For the reference, the changes in mass in a case where hematite was used as the raw material is described.

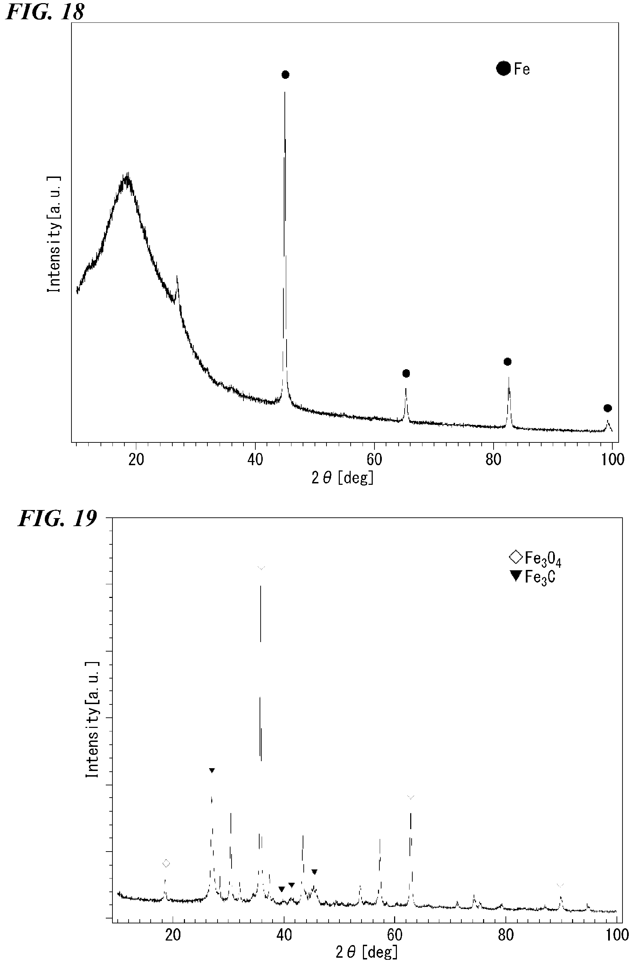

FIG. 18 shows the XRD analysis results of the specimen after the hydrogen reduction, and FIG. 19 shows the XRD analysis results of the specimen after the carbon dioxide decomposition.

**[Table 4]**

| Raw material of reducing agent | Pretreatment | | | Reduction with hydrogen | | | Carbon dioxide decomposition | | |
|---|---|---|---|---|---|---|---|---|---|
| | Before treatment | After treatment | Change in mass | Before reduction | After reduction | Change in mass | Before decomposition | After decomposition | Change in mass |
| Used disposable wanner | 1.000 | 0.915 | -0.085 | 0.911 | 0.691 | -0.220 | 0.691 | 0.855 | 0.164 |
| Hematite | 1.001 | 0.997 | -0.004 | 0.997 | 0.699 | -0.298 | 0.699 | 0.844 | 0.145 |

From the fact that similar to the reducing agent derived from magnetite or hematite, the color tone of the reducing agent derived from the used disposable warmer after the hydrogen reduction is black, it is conceived that the used disposable warmer is reduced to the state of the oxygen-completely deficient iron.

In addition, according to the XRD analysis results, the product is mostly composed of Fe, and from these XRD analysis results as well, it is conceived that the iron hydroxide in the used disposable warmer is reduced to the state of the oxygen-completely deficient iron.

Next, the obtained reducing agent derived from the used disposable warmer was used to decompose carbon dioxide at a reaction temperature of 370°C until no pressure change occurred, and the mass was measured. Table 4 above shows the change in the mass of the specimen before the carbon dioxide decomposition and after the carbon dioxide decomposition.

According to the results shown in Table 4, it was confirmed that carbon dioxide could be decomposed by using the reducing agent obtained by hydrogen reduction of the used disposable warmer. From the fact that the color tone of the reducing agent after the decomposition of carbon dioxide is black and the XRD analysis results, it is conceived that even the reducing agent derived from the used disposable warmer is oxidized only to magnetite (does not return to iron hydroxide) after the decomposition of carbon dioxide.

### (Example 12)

The state of magnetite that has a surface to which carbon adheres and that was generated by the reaction of carbon dioxide with the reducing agent in the carbon dioxide decomposition step was observed. An electron microscope (SEM) was used for the observation.

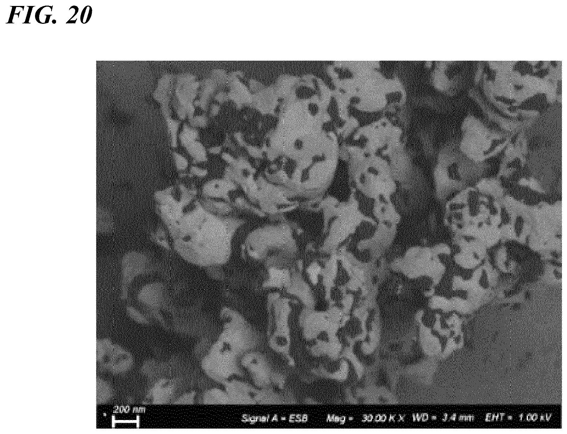

FIG. 20 shows an SEM photograph image of the magnetite having a surface to which carbon adheres.

In the SEM photograph image shown in FIG. 20, white parts of the amorphous product show oxidized reducing agent (magnetite), and black parts show nano-sized carbon particles. It was confirmed that magnetite having a surface to which carbon adheres was generated by the reducing agent reducing carbon dioxide.

### (Example 13)

In the hydrogen production step, hydrogen and magnetite were actually produced, and a conversion rate (reaction conversion rate) based on the reaction between iron chloride and water was examined.

In the experiment, water vapor was passed through a reaction tube filled with iron (11) chloride to carry out a reaction shown in Formula (19). 3FeCl₂ + 4H₂O → Fe₃O₄ + 6HCl + H₂ ... (19)

Table 5 shows the conditions for carrying out Examples 1 to 4 of the present invention. Table 6 shows a reaction conversion rate of each reaction shown in Formula (19) carried out under the conditions in Table 5.

**[Table 5]**

| | Filling amount with FeCl₂ | Reaction temperature | Reaction pressure | Flow rate of steam | Concentration of steam | Supply time of steam |
|---|---|---|---|---|---|---|
| | (g) | (°C) | (atm) | (g/min) | (% by volume) | (min) |
| Example 1 of the present invention | 4.60 | 600 | 1 | 0.04 | 88 | 120 |
| Example 2 of the present invention | 421 | 600 | 1 | 3.3 | 100 | 60 |
| Example 3 of the present invention | 4.23 | 500 | 1 | 4.23 | 100 | 120 |
| Example 4 of the present invention | 4.20 | 400 | 1 | 3.3 | 100 | 120 |

**[Table 6]**

| | Reaction conversion rate (%) |
|---|---|
| Example 1 of the present invention | 91.5 |
| Example 2 of the present invention | 100 |
| Example 3 of the present invention | 100 |
| Example 4 of the present invention | 100 |

According to the results of Example 13 shown in Table 6, it was found that magnetite and hydrogen could be efficiently produced by the reaction of iron (II) chloride with water vapor with a reaction conversion rate of 90% or more under any conditions.

### [Industrial Applicability]

According to the present invention, a carbon material and hydrogen can be efficiently generated at a low cost by using carbon dioxide and water. For example, the present invention can apply to various plants that discharge a large amount of carbon dioxide and waste heat, such as steel plants, thermal power plants, cement plants, and garbage incineration facilities; thereby, the decrease in the discharge of carbon dioxide and effective use of hydrogen can be achieved along with production of high value-added carbon materials such as nano-sized carbon. Therefore, the present invention is industrially applicable.

### [Reference Signs List]

S1: Carbon dioxide decomposition step
S2: Carbon separation step
S3: Hydrogen production step
S4: Reducing agent regeneration step

## Claims

1. A method for producing carbon and hydrogen, comprising:
a carbon dioxide decomposition step of reacting carbon dioxide with a reducing agent for generating magnetite that has a surface to which carbon adheres;
a carbon separation step of reacting the magnetite that has a surface to which carbon adheres and is obtained in the carbon dioxide decomposition step with hydrochloric acid or a hydrogen chloride gas to generate carbon and iron chloride;
a hydrogen production step of reacting the iron chloride obtained in the carbon separation step with water to generate magnetite, hydrogen, and a hydrogen chloride gas; and
a reducing agent regeneration step of reacting the magnetite and the hydrogen obtained in the hydrogen production step with each other to generate the reducing agent used in the carbon dioxide decomposition step,
wherein the reducing agent is an oxygen-deficient iron oxide represented by Fe₃O_{4-δ} (where, δ is 1 or more and less than 4) obtained by reducing magnetite while maintaining a magnetite crystal structure, an oxygen-completely deficient iron (δ = 4) obtained by completely reducing magnetite, an oxygen-deficient iron oxide obtained by reducing hematite or a used disposable warmer, or an oxygen-completely deficient iron obtained by completely reducing hematite or a used disposable warmer.

2. The method for producing carbon and hydrogen according to Claim 1,
wherein in the carbon dioxide decomposition step, a reaction temperature is in a range of 300°C or higher and 450°C or lower.

3. The method for producing carbon and hydrogen according to Claim 1 or 2,
wherein in the carbon dioxide decomposition step, a reaction pressure is in a range of 0.01 MPa or more and 5 MPa or less.

4. The method for producing carbon and hydrogen according to any one of Claims 1 to 3,
wherein in the carbon separation step, a reaction temperature is in a range of 10°C or higher and 300°C or lower.

5. The method for producing carbon and hydrogen according to any one of Claims 1 to 4,
wherein in the hydrogen production step, a reaction temperature is in a range of 10°C or higher and 800°C or lower.

6. The method for producing carbon and hydrogen according to any one of Claims 1 to 5,
wherein in the reducing agent regeneration step, a reaction temperature is in a range of 300°C or higher and 450°C or lower.

7. The method for producing carbon and hydrogen according to any one of Claims 1 to 6,
wherein in the reducing agent regeneration step, a concentration of the hydrogen is in a range of 5% by volume or more and 100% by volume or less.

8. The method for producing carbon and hydrogen according to any one of Claims 1 to 7,
wherein in the reducing agent regeneration step, the magnetite has a specific surface area in a range of 0.1 m²/g or more and 10 m²/g or less according to a BET method.

9. The method for producing carbon and hydrogen according to any one of Claims 1 to 8,
wherein in the reducing agent regeneration step, the magnetite has an average particle diameter in a range of 1 µm or more and 1,000 µm or less.

10. The method for producing carbon and hydrogen according to any one of Claims 1 to 9,
wherein in the reducing agent regeneration step, the magnetite has a bulk density in a range of 0.3 g/cm³ or more and 3 g/cm³ or less.

11. The method for producing carbon and hydrogen according to any one of Claims 1 to 10,
wherein the carbon is nano-sized carbon having a particle diameter of 1 µm or less.

12. A carbon material that is produced by the method for producing carbon and hydrogen according to any one of Claims 1 to 11.

13. A reducing agent that is generated in the reducing agent regeneration step in the method for producing carbon and hydrogen according to any one of Claims 1 to 11.

14. A method for decomposing carbon dioxide, comprising:
reacting a reducing agent with carbon dioxide to decompose the carbon dioxide, the reducing agent being an oxygen-deficient iron oxide represented by Fe₃O_{4-δ} (where, δ is 1 or more and less than 4) obtained by reducing magnetite while maintaining a magnetite crystal structure or an oxygen-completely deficient iron (δ = 4) obtained by completely reducing magnetite.
